# EUROPEAN PATENT APPLICATION

(11) **EP 1 508 270 A1**
(43) Date of publication of application: **23.02.2005**
(21) Application number: 03425503.4
(22) Date of filing: 25.07.2003
(51) Int. Cl.: A01K 13/00

(54) **Apparatus for drying animals**

(71) Applicant: Hebla s.a.s. di Damiano C. & C., 20048 Carate Brianza MI (IT)
(72) Inventor: Ghersetti, Manlio, 20055 Renate Brianza MI (IT)
(74) Representative: Pizzoli, Antonio

(57) **Abstract**

An apparatus for drying animals, which comprises ventilation means (1) which suck air from a hood (7) and send it to a heat exchanger (3) which is suitable for heating this air through electric resistors and is connected to at least one flexible pipe (4) for directing the hot air toward the animal to be dried.

## Description

The present invention relates to an apparatus for drying animals and particularly to an apparatus for drying animals quickly and with a low energetic consumption after their washing.

At present, in the professional animal washing centers, two apparatuses are used in two different working steps to dry dogs or cats after the washing. In the first step a liquid aspirator or a suitable towel is used to remove most of the water present on the hair of the animal. In the second step a hair-dryer is used to eliminate the residual humidity from the hair of the animal.

These known apparatuses absorb a great quantity of energy, generally about 3000/4000 Watt, therefore they are disadvantageous from an economic point of view.

Moreover, most of the generated hot air is dispersed in the environment and thus it is not used for drying, so that it is necessary to always keep the resistors of the hair-dryer on in order to have a supply sufficient for drying the hair of the animal.

A further drawback of the known apparatuses is their noisiness that, apart from being an acoustic pollution source, may frighten the animals to be dried.

The object of the present invention is therefore to provide an apparatus for drying animals which is free from said drawbacks. This object is achieved with an apparatus, the main features of which are specified in the first claim, while other features are specified in the remaining claims.

The apparatus according to the present invention allows to obtain a quick drying and with a low energetic consumption, thus allowing to reduce consumptions up to 1000/1400 Watt, as well as to convey the hot airflow in order to not disperse heat in the environment and thus to start the resistors for drying air only for a short period of time.

Furthermore, the noisy components of the apparatus according to the present invention can be placed far from the working area, in order to reduce the problem of the noisiness.

Further advantages and features of the invention according to the present invention will be clear to those skilled in the art from the following detailed and non limiting description of one embodiment thereof with reference to the attached drawing wherein:

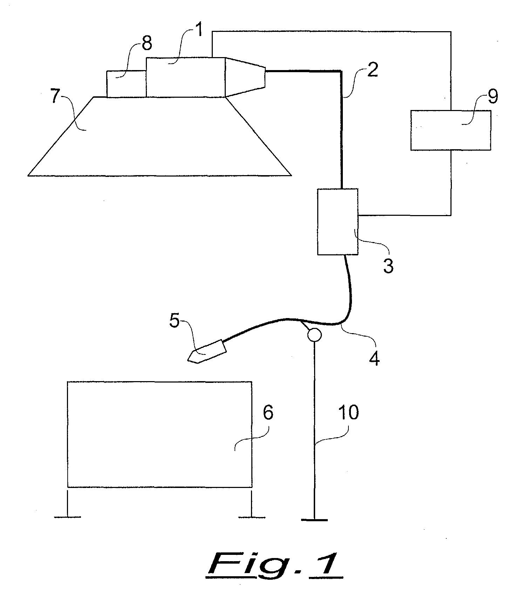

- figure 1 shows a schematic view of this apparatus.

Referring to this figure it is shown that the apparatus according to the present invention comprises ventilation means, in particular a blower 1 which sends air, through a pipe 2, to a heat exchanger 3, which heats this air by means of electric resistors. The apparatus further comprises a second pipe 4 which sends the hot air to an interchangeable distributor 5 through which the air is brought outside and directed toward the animal to be dried. The latter, during the drying operation, is preferably inside a suitable tank 6 that, in the preferred embodiment, is the same used for washing.

Blower 1, which blows air to the exchanger 3, sucks the air to be heated preferably by a sucking hood 7 arranged above the tank 6. A container 8 provided with a filter for filtering the air which goes into the blower 1 is arranged between hood 7 and the same blower 1. A bag for collecting hair and other filtered elements, which can be easily removed in order to be emptied or replaced, is arranged a inside container 8.

The drying apparatus according to the present invention further comprises an electric panel 9 for controlling its working and the air temperature, which can be regulated at different levels.

Distributor 5 may be a tapered jet pipe, a distributing pistol, an overturned funnel or an in-line distributor and may be suspended to a jointed support 10.

The heat exchanger 3 is provided with an air expanding chamber of AISI 430 or AISI 304 stainless steel, which has a cross-section much greater than the cross-section of pipes 2 and 4. These particular features allows the heat exchanger 3 to keep a high temperature even after the resistors have been switched off. Exchanger 3 can be easily fixed onto walls or onto supports of different kinds and can be provided with a container of insulating material. Pipes 2 and 4, having a variable length, are flexible, resistant to high temperatures and to chemical and mechanical stresses.

The working of the apparatus according to the present invention can be described as follows.

Once an animal has been placed and washed in tank 6, the apparatus is started through the electric panel 9. Hence, blower 1 starts to suck air through the sucking hood 7 and to blow it into pipe 2 toward the exchanger 3, wherein the resistors are switched on. Passing through exchanger 3, the air becomes hot and, through pipe 4, is discharged outside passing through distributor 5, which directs it toward the animal to be dried. At least a portion of the air distributed by pipe 4 is sucked again by hood 7 and filtered by the filter contained inside container 8, and then re-circulated in the apparatus in the above-described manner.

When the temperature reaches determinate values, the resistors of the heat exchanger 3 can be switched off, but thanks to the materials and to the above mentioned features, this exchanger continues to heat air still for a long time.

Changes and/or additions may be made by those skilled in the art to the embodiment herein described and illustrated, without departing from the scope of the same invention.

## Claims

1. An apparatus for drying animals, **characterized in that** it comprises ventilation means (1) which suck air from a hood (7) and send it to a heat exchanger (3) which is suitable for heating this air through electric resistors and is connected to at least one flexible pipe (4) for directing the hot air toward the animal to be dried.

2. An apparatus according to claim 1, **characterized in that** the free end of the flexible pipe (4) is provided with an interchangeable distributor (5).

3. An apparatus according to claim 2, **characterized in that** said interchangeable distributor (5) is provided with a jointed support (10).

4. An apparatus according to one of the previous claims, **characterized in that** the heat exchanger (3) is provided with an air expanding chamber.

5. An apparatus according to claim 4, **characterized in that** said expanding chamber of the heat exchanger (3) is made of AISI 430 or AISI 304 stainless steel.

6. An apparatus according to one of the previous claims, **characterized in that** a tank (6) suitable for containing the animal to be dried is arranged below the hood (7).

7. An apparatus according to one of the previous claims, **characterized in that** the hood (7) and the heat exchanger (3) are mutually connected through a flexible pipe (2).

8. An apparatus according to one of the previous claims, **characterized in that** a filter (8) is arranged between the hood (7) and the heat exchanger (3).

9. An apparatus according to one of the previous claims, **characterized in that** said ventilation means (1) comprise a blower.
